# NEUE EUROPÄISCHE PATENTSCHRIFT

(11) **EP 2 087 260 B2**
(45) Veröffentlichungstag und Bekanntmachung des Hinweises auf die Entscheidung über den Einspruch: **03.06.2015**
(45) Hinweis auf die Patenterteilung: 27.10.2010
(21) Anmeldenummer: 07801513.8
(22) Anmeldetag: 04.08.2007
(51) Int. Cl.: F16H 61/00, F16H 59/70, F16H 59/04, F16H 59/10

(54) **VORRICHTUNG ZUM SENSIEREN VON GETRIEBESCHALTPOSITIONEN**
APPARATUS FOR SENSING GEARBOX SHIFTING POSITIONS
DISPOSITIF POUR DÉTECTER DES POSITIONS DE CHANGEMENT DE VITESSE

(30) Priorität: 26.10.2006 DE 102006050429
(43) Veröffentlichungstag der Anmeldung: 12.08.2009
(73) Patentinhaber: WABCO GmbH, 30453 Hannover (DE)
(72) Erfinder: BRAMMER, Christian, 29303 Bergen (DE); HEURICH, Mike, 31552 Apelern (DE); HÖLSCHER, Reiner, 30926 Seelze (DE); SIEVERS, Andreas, 31319 Sehnde (DE); WIGGERS, Tino, 30926 Seelze (DE)
(86) Internationale Anmeldenummer: PCT/EP2007/006905
(87) Internationale Veröffentlichungsnummer: WO 2008/049474

(56) Entgegenhaltungen:
- EP-A1- 0 238 922
- WO-A-00/11481
- WO-A-2006/106076
- WO-A1-2006/029946
- WO-A1-2008/012169
- DE-A1- 10 044 839
- DE-A1- 19 805 621
- DE-A1- 19 805 783
- DE-A1- 19 908 036
- DE-A1- 19 938 110
- DE-A1- 19 944 203
- DE-A1- 19 950 443
- DE-A1-102005 010 692
- DE-U1- 9 116 131
- US-A- 4 519 266
- US-A1- 2002 062 714
- US-A1- 2006 009 326

## Beschreibung

Die Erfindung betrifft eine Vorrichtung zum Anschließen an einen Getriebesteller gemäß dem Oberbegriff des Anspruchs 1.

Elektronisch gesteuerte Getriebe von Kraftfahrzeugen werden mittels Getriebestellern, die elektronische Steuersignale empfangen und in mechanische Stellpositionen umwandeln, eingestellt. Dabei werden eine Mehrzahl von Aktuatoren, überlichereise pneumatisch getriebene Stellkolben, für Gang, Gasse, Split und Range eingesetzt. Um die Wegposition eines Stellkolbens, der für eine der vorgenannten Funktionen eingesetzt wird, zu bestimmen, werden Positions- bzw. Wegsensoren verwendet, welche einer Steuerungselektronik die aktuelle Position des Kolbens angeben. Auf diese Weise wird ein Regelkreis geschaffen, welcher eine bestimmte Getriebestellung als Sollwert empfängt und das Getriebe entsprechend des Eingabesignals einstellt.

Typische zu diesem Zweck eingesetzte Sensoren sind sogenannte PLCD-Wegsensoren (Permanentmagnetic-Linear-Contactless-Displacementsensors). Diese bekannten Sensoren bestehen im Wesentlichen aus einem weichmagnetischen Kern, der von einer Spule umgeben ist. Ein an den Sensor angenäherter Dauermagnet führt zu einer virtuellen Teilung des Kerns. Belegt man die Primärspule mit einem geeigneten Wechselstrom, wird in den Auswertespulen eine von der Position des Dauermagneten abhängige Spannung induziert. Die Versorgung des Sensors mit einem geeigneten Wechselstrom und die Verarbeitung, Auswertung und Umwandlung der Signale erfolgt durch eine spezielle hierfür vorgesehene Elektronik.

Nachteilig an den bekannten Vorrichtungen zum Einstellen eines Getriebes ist die aufwendige räumliche Ausgestaltung und die Verbindungstechnik, um die Auswerteelektronik und die Sensoren mit der Steuerungselektronik zu verbinden. Die langen Leitungen und die weitläufige räumliche Verteilung der Sensoren bringt eine erhöhte Fehleranfälligkeit mit sich. Darüber hinaus wird die Montage aufwendig und teuer.

Die gattungsbildende WO 2006/106076A2 offenbart eine komplette Schatteinrichtung für ein Getriebe, die unter anderen eine Vorrichtung gemäß dem Oberbegriff des Anspruchs 1 umfaßt. Die DE 91 16 131 U1 zeigt Reedschalter, die als Sensoren verwendet werden. Diese zeigen alle in eine Richtung und werden nicht innerhalb eines Gehäuses ausgewertet. Es werden rotatorische Bewegungen gemessen. Die WO 00/11481A2 offenbart eine Vorrichtung, bei der die Endpositionen eines Kolbens mit zwei Sensoren abgetastet werden oder ein Drehzahlsensor verwendet wird. Diese bekannte Vorrichtung verfügt nicht über mehrere Sensoren, die verschiedene Messrichtungen erfassen, insbesondere nicht innerhalb eines Gehäuses. Es ist auch keine Auswerteelektronik integriert.

Die US 4,519,266 A zeigt eine Vorrichtung, die eine Sensoreinrichtung für einen Schalthebel umfasst. Es werden dabei rotatorische Bewegungen gemessen, nicht translatorische. Die mechanisch angefahrenen Positionen werden in dieser Druckschrift direkt am Gangwähler gemessen.

Es ist Aufgabe der vorliegenden Erfindung, eine Vorrichtung der eingangs genannten Art bereitzustellen, welche bei räumlich kleiner und kompakter Anordnung die negative gegenseitige Beeinflussung dicht angeordneter Sensoren vermindert.

Die Aufgabe wird erfindungsgemäß durch eine Vorrichtung zum Anschließen an einen Getriebesteller eines Motorgetriebes gemäß Anspruch 1 gelöst.

Zweckmäßige Weiterbildungen der Erfindung sind in der Unteransprüchen beschrieben.

Gemäß der Erfindung werden die drei Sensoren derart angeordnet, dass ihre Längsachsen paarweise, senkrecht, aufeinander stehen. Damit werden gleich mehrere Vorteile erzielt. Da die Sensoren erfindungsgemäß relativ dicht beieinander angeordnet sind, besteht ein gewisses Risiko, dass sich die Signale der Stellkolben wechselseitig derart beeinflussen, dass auch die Sensoren der jeweils anderen Stellkolben ein Signal eines ihnen nicht zugeordneten Stellkolben, etwa in abgeschwächter Form, erhalten. Dieser Aspekt der vorliegenden Erfindung basiert auf dem Gedanken, dass die Wegposition der Stellkolben von den Sensoren mittels elektromagnetischer Wellen im Wege induktiver oder kapazitiver Kopplung ermittelt wird. Bei dicht angeordneten Sensoren kann dies zu den genannten Interferenzen führen. Derartige Interferenzen oder Störungen lassen sich vermindern oder eliminieren, indem die Sensoren paarweise alle senkrecht zueinander angeordnet sind. Zwar ließe sich eine gewisse Verringerung der unerwünschten gegenseitigen Beeinflussung bereits herbeiführen, wenn die Abstände zwischen den Sensoren ausreichend groß gewählt würden, jedoch lässt sich das bei einer sehr kompakten Bauweise in den räumlich engen Verhältnissen an einem Getriebe oder Getriebesteller nicht immer in ausreichendem Maße gewährleisten. Erfindungsgemäß wird jedoch gerade eine kompakte Bauweise angestrebt. Daher wird vorgeschlagen, die Sensoren stattdessen jeweils paarweise senkrecht zueinander anzuordnen. Das ermöglicht eine besonders kompakte Anordnung in einem gemeinsamen Gehäuse mit einer reduzierten gegenseitigen Beeinflussung.

Die Erfindung sieht weiter vor, dass die Sensoren als PLCD-Sensoren ausgeführt sind. Dadurch wird ebenfalls eine räumlich kleine und kompakte Anordnung innerhalb der erfindungsgemäßen Vorrichtung gewährleistet. Insbesondere im Hinblick auf PLCD-Sensoren ist die paarweise Anordnung senkrecht zueinander von Vorteil, da diese Sensoren auf einer Bestimmung der Getriebeschaltpositionen eines Getriebes oder der Wegposition eines Stellkolbens mittels eines Signalgebers (Permanentmagnet) basieren. Die Kopplung zwischen Sensor und Signalgeber ist, wie bei den meisten elektromagnetischen Kopplungen, richtungsgebunden und räumlich begrenzt. Sowohl die räumliche Nähe zwischen dem Sensor und dem Signalgeber als auch deren Orientierung zueinander ist von Bedeutung. Senkrecht zueinander angeordnete Sensoren vermindern die negative gegenseitige Beeinflussung dicht angeordneter Sensoren.

Dabei sind die Sensoren derart angeordnet, dass ihr räumlicher Abstand zur gemeinsamen Schnittstelle geringer ist als der Abstand zwischen der Schnittstelle und einer zu sensierenden Schaltvorrichtung. Die Schaltvorrichtung kann vorteilhaft die Stellkolben des Getriebestellers umfassen. Die Sensoren sind vorteilhaft möglichst kompakt zwischen den zu sensierenden Objekten, wie z.B. den Stellkolben des Getriebestellers, und der Schnittstelle, zum Übermitteln der Auswertesignale angeordnet. Die Schnittstelle ist als eine einzige gemeinsame Schnittstelle für alle Sensoren ausgeführt. Das ermöglicht es, die Sensoren und die Schnittstelle in einer räumlich kompakten Anordnung dicht beieinander zu platzieren. Die Auswertesignale der Sensoren können demnach unmittelbar über die gemeinsame und damit auch einzige Schnittstelle der erfindungsgemäßen Vorrichtung an die weitere Steuerelektronik für den Getriebesteller bzw. den Motor angekoppelt werden. Dies ermöglicht einen sehr platzsparenden und einfachen Aufbau der Vorrichtung. Es müssen somit keine langen und fehleranfälligen Kabelverbindungen zwischen Sensoren und weiterer Elektronik vorgesehen sein. Stattdessen sind sehr kurze Verbindungen zwischen der Schnittstelle und den Sensoren möglich. Die Montage und der Austausch einer erfindungsgemäßen Vorrichtung kann in Folge der erfindungsgemäßen Anordnung der Sensoren zusätzlich dadurch vereinfacht werden, dass die Vorrichtung als kompakte modulare Einheit ausgestaltet ist. Dadurch kann die erfindungsgemäße Vorrichtung in Form eines Sensormoduls mit wenigen Handgriffen an einer Position des Getriebestellers angeordnet werden. Dieser Aspekt wird noch zusätzlich verbessert, wenn die gemeinsame Schnittstelle räumlich vorteilhaft von einer Mehrzahl von metallischen Anschlüssen, wie z.B. eine normierte Standardschnittstelle, gebildet wird. An diese wird erfindungsgemäß ein Stecker oder ein weiteres Modul angekoppelt, um so die Auswertesignale der Sensoren zur Steuerung des Getriebes einsetzen zu können.

Die Sensoren werden bevorzugt zum Sensieren der Gangposition, der Gassenposition und der Splitposition des Getriebes eingesetzt. Dabei wird insbesondere berücksichtigt, dass diese drei Stellaufgaben des Getriebestellers bei herkömmlichen Lösungen dazu führen, dass die Sensoren weit über den Getriebesteller bzw. das Getriebe verteilt sind. Erfindungsgemäß wird nun vorgeschlagen, stattdessen für drei unterschiedliche Stellpositionen, wie Gang, Gasse und Split, eine modulare kompakte Einheit vorzusehen, in der sich die Sensoren für alle Stellkolben befinden. Das gelingt nur, wenn die Sensoren derart geschickt im Hinblick auf die Signalgeber an den Stellkolben vorgesehen werden, dass die kompakte modulare Bauform erreicht werden kann. Daher werden gemäß eines vorteilhaften Aspektes der vorliegenden Erfindung die Signalgeber für die Sensoren derart an den Stellkolben des Getriebestellers oder am Getriebe angeordnet, dass der erfindungsgemäße Kompakte Aufbau der Vorrichtung mit den Sensoren ermöglicht wird.

Gemäß einem weiteren vorteilhaften Aspekt der vorliegenden Erfindung werden die Sensoren im Hinblick auf die zu sensierenden Stellkolben, deren Wegposition jeweils von einem Sensor aufgenommen werden soll, die im Wesentlichen gleiche Distanz einnehmen. Dadurch wird gewährleistet, dass es einen optimalen Bereich gibt, in dem alle drei Sensoren angeordnet sein können. Wird dies berücksichtigt, dann lassen sich die Sensoren in einem kompakten Gehäuse unterbringen, sodass ein modularer Aufbau der erfindungsgemäßen Vorrichtung möglich wird.

Gemäß einer weiteren vorteilhaften Ausgestaltung der Erfindung wird die jeweilige Auswerteelektronik für die Sensoren ebenfalls zwischen dem Getriebe oder den Stellkolben des Getriebestellers und der gemeinsamen Schnittstelle der Sensoren angeordnet. Gemäß einer weiteren vorteilhaften Ausgestaltung kann sich die Auswerteelektronik sogar vorteilhaft zwischen den jeweiligen Sensoren und der Schnittstelle befinden. Auch hierdurch wird ein sehr effektiver und kompakter Aufbau der erfindungsgemäßen Vorrichtung als Modul ermöglicht. Dabei kann vorteilhaft vorgesehen sein, dass die Auswerteelektronik als eine kompakte Einheit für mehrere Sensoren oder als eine kompakte Einheit je Sensor ausgestaltet ist. Die Verbindungsleitungen zwischen den Sensoren und der Auswerteelektronik werden dadurch sehr kurz gehalten, was wiederum die Stör- und Fehleranfälligkeit vermindert.

Es ist weiterhin vorteilhaft, wenn die gemeinsame Schnittstelle als eine standardisierte Schnittstelle, insbesondere als eine Verbindung nach Norm IP6K9K, ausgeführt ist. Diese ist gegen das Eindringen von Schmutz, Wasser, etc. geschützt. Standardisierte Schnittstellen sind allgemein verfügbar und mit einer Vielzahl unterschiedlicher Ausgestaltungen von Getriebestellern koppelbar. Darüber hinaus sind sie räumlich kompakt und lassen sich durch einfache Handgriffe mit den anzukoppelnden Elementen des Getriebestellers oder einer anderen Elektronik koppeln.

Ein Ausführungsbeispiel der vorliegenden Erfindung wird anhand der folgenden Figuren beispielhaft beschrieben. Es zeigt
- Fig. 1: ein erfindungsgemäßes Sensormodul in einer perspektivischen Ansicht,
- Fig. 2: das Ausführungsbeispiel gemäß Fig. 1 in einer perspektivischen halbtransparenten Darstellung, und
- Fig. 3: das Ausführungsbeispiel gemäß den Figuren 1 und 2 in einer weiteren perspektivischen Darstellung mit hervorgehobenen Komponenten.

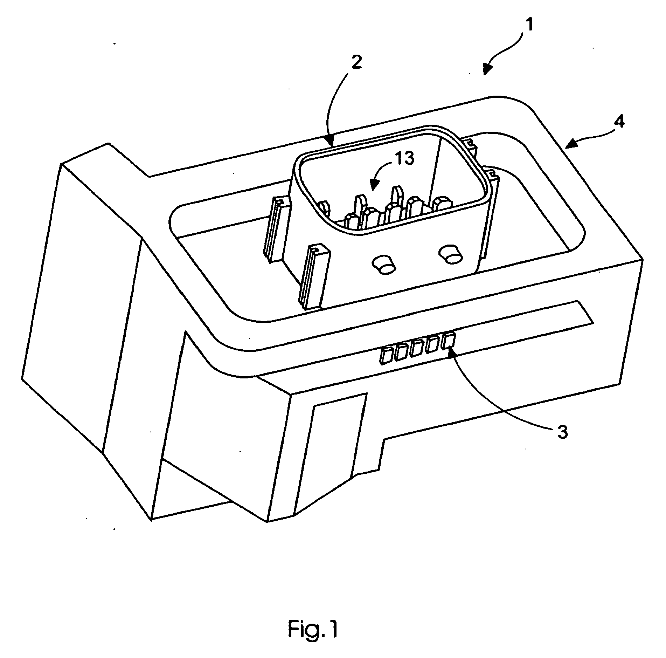

Fig.1 zeigt ein Ausführungsbeispiel eines erfindungsgemäßen Sensormoduls. Das erfindungsgemäße Sensormodul 1 ist von einem geschlossenen Gehäuse 4 umgeben. Aus dem Gehäuse hebt sich eine erste Schnittstelle 2 und eine zweite Schnittstelle 3 ab. Die erste Schnittstelle 2 weist interne metallische Kontaktreihen 13 auf. Diese Kontakte führen die Signale von Sensoren (nicht dargestellt), welche in dem Sensormodul 1 untergebracht sind, und die Signale einer zweiten Schnittstelle 3 zur Steuerelektronik (Electronic-Control-Unit = ECU, nicht dargestellt). Die zweite Schnittstelle 3 weist ebenfalls eine Reihe von Kontakten auf. Die erste Schnittstelle 2 kann vorteilhaft als Steckverbindung nach IP6K9K-Norm ausgeführt sein. Andere Ausführungen sind jedoch ebenfalls denkbar, soweit die Schnittstelle an eine Steuerungselektronik eines Getriebestellers koppelbar ist. Somit muss die Steuerungselektronik für den Getriebesteller eine korrespondierende Schnittstelle zur ersten Schnittstelle 2 aufweisen. In einer vorteilhaften Ausgestaltung werden weitere Steuersignale von einer Steuerungselektronik für den Getriebesteller, welche in Fig. 1 nicht dargestellt ist, ebenfalls durch die erste Schnittstelle 2 empfangen und durch das Innere des Sensormoduls 1 an eine weitere (zweite) Schnittstelle 3 durchgeleitet. Zur weiteren Verarbeitung dieser zusätzlichen durchgeleiteten Signale, kann in dem Sensormodul 1 eine Elektronik vorgesehen sein. In einer vorteilhaften Ausgestaltung werden die Signale jedoch ohne weitere Verarbeitung zur zweiten internen Schnittstelle 3 durchgeschliffen. Bei diesen Signalen kann es sich vorteilhaft um Signale zur Ansteuerung von Elektromagneten für den Getriebesteller handeln. Um nur eine einzige externe Schnittstelle 2 nach außen zu bilden, werden die zusätzlichen Leitungen bzw. die Signale für die zweite interne Schnittstelle 3 innen durch die externe Schnittstelle 2 geleitet. Das Gehäuse der erfindungsgemäßen Vorrichtung ist derart ausgestaltet, dass es sich optimal und platzsparend in einen begrenzten Raum am Getriebesteller oder auch an einem Getriebe einfügt.

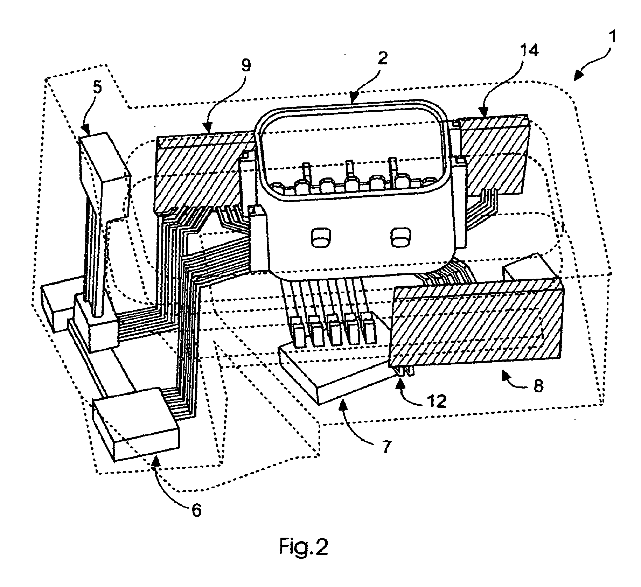

Fig. 2 zeigt das Ausführungsbeispiel eines erfindungsgemäßen Sensormoduls gemäß Fig. 1 in einer halbtransparenten Darstellung, in welcher das geschlossene Gehäuse nur noch in gestrichelter Form angedeutet ist. Durch diese Darstellung werden die im Sensormodul angeordneten Komponenten sichtbar. Dabei handelt es sich um Sensoren 5, 6, 7 zur Bestimmung einer Getriebeschaltposition, z.B. von Zylindern eine Getriebes oder Stellkolben (nicht dargestellt), welche die Stellmaßnahmen des Getriebestellers entweder unmittelbar an den Stellkolben oder am Getriebe erfassen. In dem in Fig. 2 dargestellten Ausführungsbeispiel ist für jeden Sensor 5, 6, 7 eine Auswerteelektronik 9, 14, 8 vorgesehen. Die Aufteilung in drei einzelne Komponenten für die Auswerteelektronik ist jedoch nicht zwingend. Ebenso kann eine einzelne Auswerteelektronik für alle Sensoren 5, 6, 7 vorgesehen sein. Von der Auswerteelektronik gelangen die Signale über Verbindungsleitungen zur Schnittstelle 2. Die Sensoren 5, 6, 7 sind über diverse Verbindungsleitungen mit der Auswerteelektronik verknüpft. Die Komponenten der Auswerteelektronik 9, 14, 8 sind mit der Schnittstelle 2 gekoppelt. Die zweite Schnittstelle 3, welche Signale bereitstellt, die von der externen ersten Schnittstelle 2 empfangen werden, stellt eine Reihe weiterer elektrischer Kontakte, zum Beispiel zur Ansteuerung von Magneten für die Steuerung der pneumatischen Gassen, Gang und Splitkolben, bereit. Die Sensoren 5, 6, 7 sind als erster Sensor 5, zweiter Sensor 6 und dritter Sensor 7 in einer spezifischen Anordnung ausgeführt. Bei den Sensoren 5, 6, 7 handelt es sich um PLCD-Sensoren. Diese Sensoren 5, 6, 7 sind vorgesehen, um die Position je eines Stellkolbens des Getriebestellers zu erfassen. Dies erfolgt zum Beispiel durch induktive Kopplung. Bei einer Ausführung als PLCD-Sensor werden an jedem zu erfassenden Bauteil, z.B. an den Stellkolben oder an geeigneter Position am Getriebe, Magneten als Signalgeber angeordnet, deren Bewegung in den PLCD-Sensoren ein korrespondierendes Signal hervorruft. Dieses Signal wird von der Auswerteelektronik 9, 14, 8 in geeigneter Weise gewandelt, um dieses über die erste Schnittstelle 2 an die Steuerelektronik des Getriebestellers weiterzuleiten. In einer vorteilhaften Ausgestaltung kann die externe Schnittstelle ausgestaltet sein, um mit einem speziellen Bussystem zu kommunizieren.

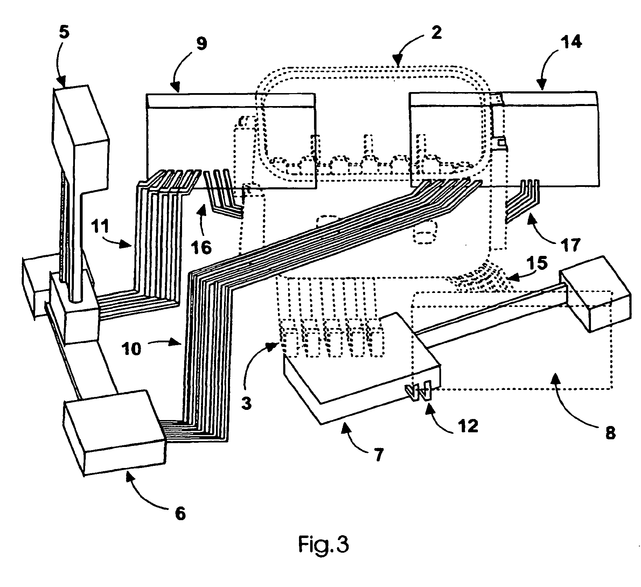

Fig. 3 ist eine weitere Darstellung des Ausführungsbeispiels gemäß einem Aspekt der Erfindung, welche einen noch tieferen Einblick in ein erfindungsgemäßes Sensormodul ermöglicht. Hierbei sind nun auch noch die Auswerteelektronik 8 und die erste Schnittstelle 2 transparent, also mit gestrichelten Linien dargestellt, und das geschlossene Gehäuse ist vollständig entfernt. Hierdurch wird der Sensor 7 sichtbar, welcher sich in ähnlicher Weise wie die Sensoren 5 und 6 in einer Richtung des Sensormoduls erstreckt. Die Verbindungsleitungen 10, 11, 12 koppeln die Sensoren 5, 6, 7 and ihre jeweilige Auswertelektronik 9, 14, 8. Die Auswerteelektronik 8, 9, 14 übermittelt die ausgewerteten Signale über die Verbindungsleitungen 15, 16, 17 und die Schnittstelle. Über die Verbindungsleitungen 10, 11, 12 werden die Auswertesignale der Sensoren an die Auswertelektronik 9, 14, 8 übergeben.

In der Darstellung gemäß Fig. 3 wird ebenfalls deutlich, dass die Sensoren paarweise senkrecht zueinander angeordnet sind. Diese Anordnung gibt vor, wie die Signalgeber am Getriebe oder an den Stellkolben bzw. Zylindern des Getriebestellers angeordnet sein müssen. Vorteilhaft an einer derartigen Anordnung ist, dass sich die Signale der Signalgeber auf den Stellkolben oder im Getriebe weniger stark gegenseitig beeinflussen. Eine Begrenzung der gegenseitigen Interferenz der Signalgeber bzw. der Sensorsignale ist auch durch einen hinreichenden Abstand der Sensoren oder Signalgeber zu erreichen zu erreichen. Ebenfalls dargestellt ist die Aufteilung der Auswerteelektronik in drei einzelne Komponenten 9, 14 und 8, die jedoch nicht zwingend ist. Entscheidend ist, dass sich die Elektronik 9, 14, 8, und die Sensoren 5, 6, 7 zwischen den Stellkolben bzw. dem Getriebe und der Schnittstelle 2 befinden. Dadurch kann eine sehr kompakte Bauform erreicht werden. Das erfindungsgemäße Sensormodul, gemäß dem vorstehend beschriebenen Ausführungsbeispiel, stellt somit die universelle Schnittstelle zwischen den Aktuatoren und den Sensoren 5, 6, 7, die zum Betrieb eines Getriebestellers notwendig sind, dar. Die meisten der Steuersignale und Sensorsignale werden dabei in vorteilhafter Weise durch die erste Schnittstelle 2 geleitet. Hierdurch verringert sich der Aufwand an Steckern gegenüber dem Stand der Technik. Eine geringere Anzahl von Steckverbindungen verringert das Risiko des Eindringens von Schmutz und anderen ungewünschten Störeinflüssen. Insgesamt wird die Fehleranfälligkeit des Systems durch die Verringerung von externen Schnittstellen reduziert. Der Aufwand bei der Montage wird ebenfalls reduziert.

## Patentansprüche

1. Vorrichtung zum Anschließen an einen Getriebesteller eines Motorgetriebes, der elektronische Steuersignale empfängt und in mechanische Stellpositionen umwandelt, wobei die Vorrichtung Sensoren (5, 6, 7) zum Sensieren von Getriebeschaltpositionen einer Schaltvorrichtung umfasst und eine Schnittstelle (2) zur Übermittlung der Auswertesignale der Sensoren (5, 6, 7) an die Steuerelektronik eines Getriebestellers umfasst und der Abstand der Sensoren (5, 6, 7) zur Schnittstelle (2) geringer ist als der Abstand zwischen der Schnittstelle (2) und der zu sensierenden Schaltvorrichtung, **dadurch gekennzeichnet,**
**dass** drei Sensoren (5, 6, 7) derart angeordnet sind, dass ihre Längsachsen paarweise, senkrecht aufeinander stehen und als PLCD-Sensoren ausgeführt sind.

2. Vorrichtung nach Anspruch 1, **dadurch gekennzeichnet, dass** die zu sensierende Schaltvorrichtung die Stellkolben des Getriebestellers umfasst.

3. Vorrichtung nach Anspruch 2, **dadurch gekennzeichnet, dass** die Sensoren (5, 6, 7) derart angeordnet sind, dass die Distanz der Sensoren (5, 6, 7) zu den korrespondierenden, zu sensierenden Stellkolben des Getriebestellers gleich groß ist.

4. Vorrichtung nach einem der Ansprüche 2 oder 3, **dadurch gekennzeichnet, dass** die Auswerteelektronik (8, 9, 14) für die Sensoren in einer kompakten Bauform zwischen den Stellkolben und der gemeinsamen Schnittstelle der Sensoren angeordnet ist.

5. Vorrichtung nach Anspruch 4, **dadurch gekennzeichnet, dass** die Schnittstelle (2) eine Steckverbindung nach IP6K9K-Norm ist.

6. Vorrichtung nach einem der Ansprüche 4 oder 5, **dadurch gekennzeichnet, dass** eine zweite Schnittstelle (3) vorgesehen ist, welche Signale bereitstellt, die von der externen ersten Schnittstelle (2) empfangen werden.

## Claims

1. Device for connection to a transmission actuator of an engine transmission, which transmission actuator receives electronic control signals and converts them into mechanical actuating positions, the device comprising sensors (5, 6, 7) for sensing transmission shifting positions of a shifting device and an interface (2) for transmitting the evaluation signals of the sensors (5, 6, 7) to the electronic control unit of a transmission actuator, and the distance of the sensors (5, 6, 7) from the interface (2) is shorter than the distance between the interface (2) and the shifting device to be sensed, **characterized in that** three sensors (5, 6, 7) are arranged in such a way that their longitudinal axes are perpendicular to one another as PLCD sensors.

2. Device according to Claim 1, **characterized in that** the shifting device to be sensed comprises the actuating pistons of the transmission actuator.

3. Device according to Claim 2, **characterized in that** the sensors (5, 6, 7) are arranged in such a way that the distances between the sensors (5, 6, 7) and the corresponding actuating pistons, to be sensed, of the transmission actuator, are equal in size.

4. Device according to either of Claims 2 or 3, **characterized in that** the electronic evaluation unit (8, 9, 14) for the sensors is arranged in a compact design between the actuating pistons and the common interface of the sensors.

5. Device according to Claim 4, **characterized in that** the interface (2) is a plug-type connection according to the IP6K9K standard.

6. Device according to either of Claims 4 or 5 **characterized in that** a second interface (3) is provided which makes available signals which are received by the external, first interface (2).

## Revendications

1. Dispositif à raccorder à un actionneur de boîte de vitesses d'une boîte de vitesses de moteur, lequel reçoit des signaux de commande électroniques et les convertit en positions de réglage mécaniques, le dispositif comprenant des capteurs (5, 6, 7) pour détecter des positions de changement de rapport d'un dispositif de changement de rapport et une interface (2) pour communiquer les signaux d'interprétation des capteurs (5, 6, 7) à l'électronique de commande d'un actionneur de boîte de vitesses et l'écart entre les capteurs (5, 6, 7) et l'interface (2) étant inférieur à l'écart entre l'interface (2) et le dispositif de changement de rapport à détecter,
**caractérisé en ce**
**que** trois capteurs (5, 6, 7) sont disposés de telle sorte que leurs axes longitudinaux soient perpendiculaires par paires les uns aux autres et soient réalisés sous la forme de capteurs PLCD.

2. Dispositif selon la revendication 1, **caractérisé en ce que** le dispositif de changement de rapport à détecter comprend les pistons de réglage de l'actionneur de boîte de vitesses.

3. Dispositif selon la revendication 2, **caractérisé en ce que** les capteurs (5, 6, 7) sont disposés de telle sorte que les distances entre les capteurs (5, 6, 7) et les pistons de réglage correspondants à détecter de l'actionneur de boîte de vitesses soient égales.

4. Dispositif selon l'une des revendications 2 ou 3, **caractérisé en ce que** l'électronique d'interprétation (8, 9, 14) des capteurs est disposée dans une forme compacte entre les pistons de réglage et l'interface commune des capteurs.

5. Dispositif selon la revendication 4, **caractérisé en ce que** l'interface (2) est une liaison enfichable selon la norme IP6K9K.

6. Dispositif selon l'une des revendications 4 ou 5, **caractérisé en ce qu'**il est prévu une deuxième interface (3) qui délivre des signaux qui sont reçus par la première interface (2) externe.
